# DEMANDE DE BREVET EUROPEEN

(11) **EP 4 825 623 A1**
(43) Date de publication de la demande: **21.10.2026**
(21) Numéro de dépôt: 26172294.6
(22) Date de dépôt: 14.04.2026
(51) Int. Cl.: B60K 1/04

(54) **VÉHICULE AUTOMOBILE AVEC UNE UNITÉ DE RECHARGE SOUS AU MOINS UN SIÈGE**

(30) Priorité: 14.04.2025 FR 2503947
(71) Demandeur: Flexis, 92100 Boulogne Billancourt (FR)
(72) Inventeur: CAUDRON, Michael, 78640 VILLIERS-SAINT-FREDERIC (FR)
(74) Mandataire: Lavoix

(57) **Abrégé**

La présente invention concerne un véhicule automobile comprenant :
- une caisse délimitant un habitacle (32), la caisse comprenant un plancher (34) avec une face supérieure (36) orientée vers l'habitacle (32) et une face inférieure (38) opposée à la face supérieure (36) selon une direction verticale (Z), le plancher (34) comprenant un embossement (40),
- au moins un siège (26) agencé dans l'habitacle (32) et fixé sur la face supérieure (36) du plancher (34), l'embossement (40) s'étendant sous le siège (26),
- une batterie de traction (28), et
- une unité de recharge (30) agencée, selon la direction verticale (Z), entre la batterie de traction (28) et la face inférieure (38) de l'embossement (40) du plancher (34).

L'unité de recharge (30) comprend un chargeur (58) et un convertisseur DC/DC (60).

## Description

La présente invention concerne un véhicule automobile, notamment électrique, et en particulier comprenant une unité de recharge agencée sous au moins un siège.

Les véhicules utilitaires, notamment légers tels que des camionnettes, sont de plus en plus utilisés, en particulier en ville, par exemple pour assurer des livraisons de colis et/ou de marchandises.

Afin d'assurer une maniabilité satisfaisante de tels véhicules, notamment dans les espaces urbains étroits, il est préférable de concevoir de tels véhicules avec un porte-à-faux avant réduit.

Néanmoins, une telle réduction du porte-à-faux réduit fortement l'espace disponible pour l'agencement des équipements, dont par exemple l'unité de recharge, à l'avant du véhicule.

En outre, pour s'adapter à différentes utilisations spécifiques, il est connu de fabriquer des véhicules avec des adaptations spécifiques, par exemple avec quatre roues motrices ou munis d'une pile à combustible.

Cependant, de telles adaptations nécessitent généralement l'ajout d'équipements supplémentaires, entrainant en conséquence des modifications importantes de l'architecture globale du véhicule.

Un des buts de l'invention est de trouver un compromis entre ces deux contraintes, et notamment de proposer un véhicule avec une unité de recharge agencée de sorte à garantir un porte-à faux avant réduit et présentant une architecture adaptée à différentes variantes du véhicule.

A cet effet, l'invention a pour objet un véhicule automobile, notamment électrique, comprenant :
- une caisse délimitant un habitacle, la caisse comprenant un plancher avec une face supérieure orientée vers l'habitacle et une face inférieure opposée à la face supérieure selon une direction verticale, le plancher comprenant un embossement,
- au moins un siège agencé dans l'habitacle et fixé sur la face supérieure du plancher, l'embossement s'étendant sous le siège
- une batterie de traction, et
- une unité de recharge agencée, selon la direction verticale, entre la batterie de traction et la face inférieure de l'embossement du plancher.

L'unité de recharge comprend un chargeur et un convertisseur DC/DC.

Suivant d'autres aspects avantageux de l'invention, le véhicule comprend une ou plusieurs des caractéristiques suivantes, prises isolément ou suivant toutes les combinaisons techniquement possibles :
- L'unité de recharge comprend, en outre, des câblages haute-tension reliant électriquement le chargeur et la batterie de traction.
- L'unité de recharge comprend, en outre, un circuit de refroidissement.
- L'unité de recharge comprend un support de fixation fixant l'unité de recharge à la face inférieure du plancher.
- L'embossement présente une section en forme de U inversé.
- Le véhicule comprend, en outre, un compartiment moteur avant, un compartiment moteur arrière et un moteur agencé dans le compartiment moteur arrière.
- Le véhicule comprend, en outre, un deuxième moteur agencé dans le compartiment moteur avant.
- Le véhicule comprend, en outre, une pile combustible agencée dans le compartiment moteur avant.
- Le véhicule comprend, en outre, des réservoirs à hydrogène pour l'alimentation de la pile à combustible.
- L'au moins un siège est un siège avant du véhicule.

L'invention apparaîtra plus clairement à la lecture de la description qui va suivre, donnée uniquement à titre d'exemple non limitatif, et faite en référence aux dessins dans lesquels :
[Fig. 1] la Figure 1 est une vue schématique de côté d'un premier véhicule selon l'invention,

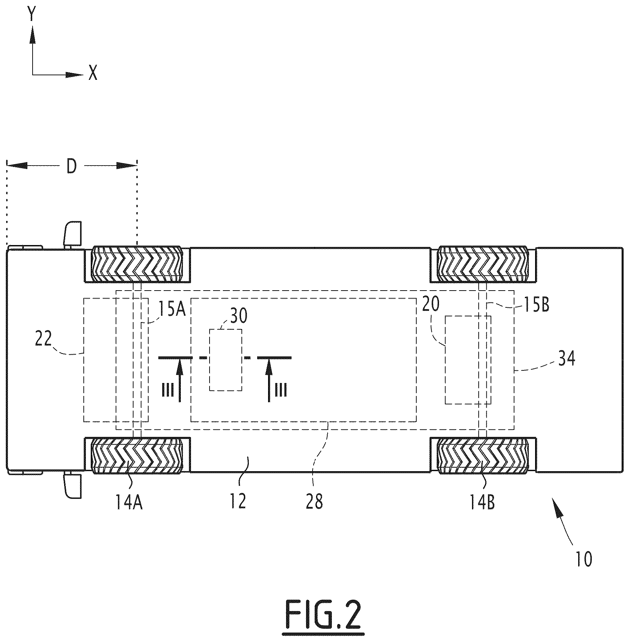

[Fig. 2] la Figure 2 est une vue schématique de dessous du premier véhicule de la Figure 1,
[Fig. 3] la Figure 3 est une vue en coupe du premier véhicule de la Figure 2, et
[Fig. 4] la Figure 4 est une vue schématique de dessous d'un deuxième véhicule selon l'invention.

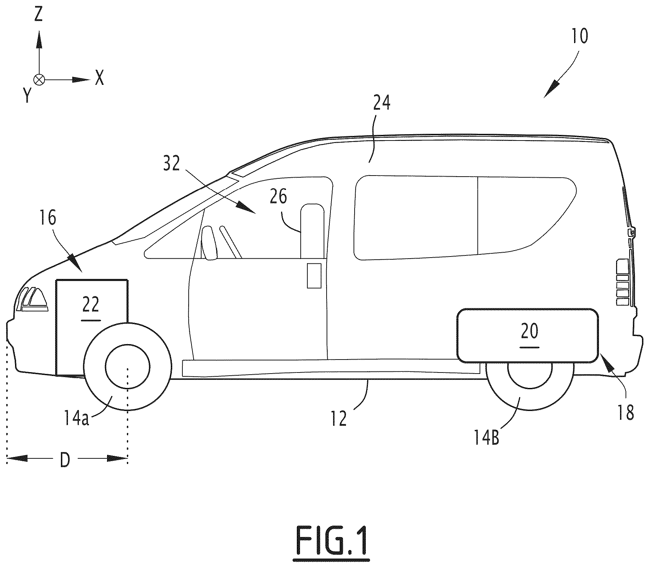

La Figure 1 montre un premier véhicule 10 selon l'invention, et en particulier un véhicule 10 selon un premier mode de réalisation de l'invention.

Le véhicule 10 est par exemple un véhicule automobile, en particulier un véhicule utilitaire, notamment un véhicule utilitaire léger.

En particulier, le véhicule 10 est destiné au transport de marchandises, telles que des colis, et/ou de passagers.

Le véhicule 10 est par exemple une camionnette, comme illustré sur la Figure 1.

Pour des raisons de clarté, on définit un repère orthonormé XYZ comprenant une direction longitudinale X, une direction transversale Y et une direction verticale Z. La direction longitudinale X s'étend selon l'axe d'avancement du véhicule 10 et correspond à un axe avant-arrière du véhicule 10. La direction transversale Y est perpendiculaire à la direction longitudinale X et correspond à un axe gauche-droite du véhicule 10. La direction verticale Z est perpendiculaire à la direction longitudinale X et à la direction transversale Y et correspond à un axe bas-haut du véhicule 10.

Les termes « haut » et « bas » sont définis par rapport à la direction verticale Z correspondant à la hauteur du véhicule. Les termes « gauche », « droite », « avant » et « arrière » sont définis par rapport au sens de la direction d'avancement usuel du véhicule.

Le véhicule 10 est de préférence un véhicule électrique.

Le véhicule 10 est par exemple un véhicule avec quatre roues motrices, communément appelé « véhicule 4x4 ».

Par exemple, le véhicule 10 comprend un châssis 12, notamment de type « plateforme skateboard », et quatre roues 14A, 14B, en particulier motrices.

En particulier, le châssis 12 comprend par exemple une structure plate, ressemblant à une planche de skateboard, et destinée à supporter l'ensemble des composants mécaniques et électroniques essentiels à la propulsion et au contrôle du véhicule.

Les quatre roues comprennent notamment deux roues avant 14A et deux roues arrière 14B.

Les roues 14A, 14B sont en particulier montées sur des essieux 15A, 15B. Plus précisément, les deux roues avant 14A sont montées sur un essieu avant 15A et les deux roues arrière 14B sont montées sur un essieu arrière 15B.

De préférence, les roues 14A, 14B sont par exemple reliées au châssis 12 via un système de suspension.

Comme cela est visible sur la Figure 1, le véhicule 10 comprend par exemple un compartiment moteur avant 16, notamment agencé à l'avant du véhicule 10, et un compartiment moteur arrière 18, notamment agencé à l'arrière du véhicule 10.

Le véhicule 10 comprend par exemple au moins un moteur 20, qui est notamment un moteur électrique.

Le moteur 20 est notamment un moteur arrière, en particulier agencé dans le compartiment moteur arrière 18.

Le moteur arrière 20 est de préférence responsable de l'entraînement en rotation de l'essieu arrière 15B.

Dans un mode de réalisation particulier où le véhicule 10 est un véhicule 4x4, le véhicule 10 comprend, de préférence, un deuxième moteur 22, qui est notamment également un moteur électrique.

Le deuxième moteur 22 est notamment un moteur avant, en particulier agencé dans le compartiment moteur avant 16.

Le deuxième moteur 22 est de préférence responsable de l'entraînement en rotation de l'essieu avant 15A.

Le véhicule 10 présente avantageusement un porte-à-faux avant faible, correspondant à la distance D entre l'axe des roues avant 14A du véhicule 10 et une extrémité avant du véhicule 10.

Par exemple, le porte-à-faux agnat est compris entre 600 et 900 mm, et notamment sensiblement égal à 750 mm.

Le véhicule 10 comprend une caisse 24, au moins un siège 26, une batterie de traction 28 et une unité de recharge 30.

La caisse 24 est par exemple fixée au châssis 12.

La caisse 24 délimite un habitacle 32 du véhicule.

En particulier, l'habitacle 32 désigne ici l'espace intérieur destiné aux passagers.

La caisse 24 comprend par exemple une pluralité de pièces structurelles, telles que des montants ou des panneaux de carrosserie par exemple.

La caisse 24 comprend un plancher 34.

Le plancher 34 délimite par exemple la partie inférieure de l'habitacle 32.

En particulier, le plancher 34 s'étend notamment en regard du châssis 12, et en particulier entre le châssis 12 et l'habitacle 32 selon la direction verticale Z.

Le plancher 34 présente une face supérieure 36 et une face inférieure 38 opposée à la face supérieure 36 selon la direction verticale Z.

La face supérieure 36 est orientée vers l'habitacle 32, et notamment vers le haut.

La face inférieure 38 est orientée vers le sol, et par exemple en direction du châssis, et notamment vers le bas selon la direction verticale Z.

Le plancher 34 comprend un embossement 40.

Par exemple, l'embossement 40 s'étend selon la direction longitudinale X entre deux portions planes 42 du plancher 34.

Plus précisément, l'embossement 40 définit une portion du plancher 34 selon la direction longitudinale X.

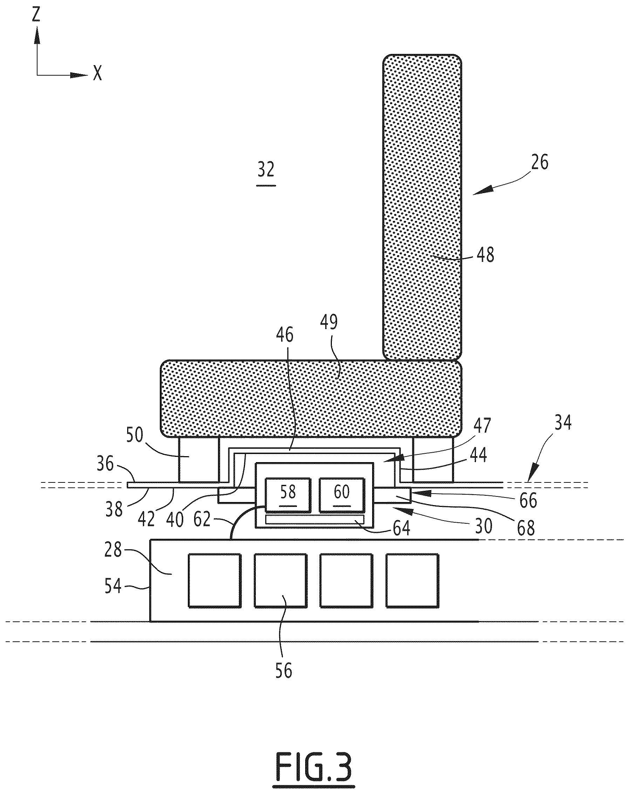

L'embossement 40 présente par exemple une section en forme de U inversé, comme cela est visible sur la Figure 3. La section est notamment définie dans le plan XZ.

De préférence, l'embossement 40 définit un espace de réception 47.

En particulier, l'embossement 40 comprend par exemple deux branches verticales 44, notamment s'étendant vers le haut, reliées entre elle par une branche horizontale 46, de sorte avantageusement à définir l'espace de réception 47 sous celle-ci.

Les deux portions planes 42 s'étendent notamment dans le plan XY.

Chacune des deux portions planes 42 sont par exemple reliée à l'une des branches verticales 44 de l'embossement 40.

Le siège 26 est agencé dans l'habitacle 32.

Le siège 26 est par exemple un siège avant, notamment agencé à l'avant du véhicule 10.

Le siège 26 est par exemple le siège pour le conducteur.

De préférence, le véhicule 10 comprend au moins deux sièges 26, en particulier un siège pour le conducteur et un siège pour le passager avant.

Le ou chaque siège 26 comprend par exemple un dossier 48 et une assise 49, comme cela est notamment visible sur la Figure 3.

Par exemple, le ou chaque siège 26 comprend deux traverses de fixation 50, notamment s'étendant chacune selon la direction transversale Y sous l'assise 49.

Le ou chaque siège 26 est fixé sur le plancher 34, et notamment sur la face supérieure 36 du plancher 34, l'embossement 40 s'étendant sous le siège 26.

Par exemple, chacune des traverses de fixation 50 du siège 26 correspondant est fixée sur la face supérieure 36 du plancher 34, et notamment de sorte à ce que l'assise 49 s'étendent au-dessus de l'embossement 40.

Comme cela est visible sur la Figure 3, l'espace de réception 47 s'étend de préférence sous le siège 26, et notamment sous l'assise 49.

La batterie de traction 28 est de préférence adaptée pour stocker l'énergie nécessaire pour alimenter le moteur 20 et/ou le deuxième moteur 22.

La batterie de traction 28 présente par exemple une tension aux bornes de 800 V.

Par exemple, la batterie de traction 28 comprend un carter métallique 54 et des modules 56 de cellules électrochimiques.

Par exemple, le carter métallique 54 définit une enceinte de protection dans laquelle sont logés les modules 56.

Le carter 54 présente par exemple une forme de pavé droit.

La batterie de traction 28, et plus précisément le carter 54, est notamment fixée au châssis 12.

En particulier, la batterie de traction 28 est agencée, selon la direction verticale Z, entre le plancher 34 et la châssis 12.

Comme cela est visible sur la Figure 3, la batterie de traction 28 est par exemple agencée contre une face supérieure du châssis 12 et en regard de la face inférieure 38 du plancher 34, notamment à distance de celle-ci.

L'unité de recharge 30 comprend au moins un chargeur 58 et un convertisseur DC/DC 60.

De préférence, l'unité de recharge 30 comprend au moins un parmi des câblages haute-tension 62, un circuit de refroidissement 64 et un support de fixation 66.

L'unité de recharge 30 forme de préférence un bloc.

Autrement dit, l'ensemble des composants de l'unité de recharge 30 sont assemblés entre eux et sont plus particulièrement solidaires les uns de autres.

Comme cela est visible sur la Figure 3, l'unité de recharge 30 est agencée, selon la direction verticale Z, entre la batterie de traction 28 et la face inférieure 38 du plancher 34, et notamment de l'embossement 40.

Plus particulièrement, l'unité de recharge 30 est agencée au moins partiellement dans l'espace de réception 47, notamment sous le ou les siège(s) 26.

Le chargeur 58 est par exemple destiné à convertir l'énergie électrique provenant d'une source externe, comme une prise murale ou une borne de recharge, en énergie stockée dans la batterie de traction 28.

Avantageusement, le chargeur 58 est relié à la batterie de traction 28 par les câblages haute-tension 62.

Le convertisseur DC/DC 60 est par exemple connecté au chargeur 58.

Le convertisseur DC/DC 60 est par exemple adapté pour convertir une tension continue (DC) d'un niveau à un autre.

En particulier, le convertisseur DC/DC 60 est un convertisseur de tension configuré pour alimenter des organes électriques du véhicule 10 fonctionnant à une tension spécifique.

Par exemple, l'unité de recharge 30 est configurée pour alimenter simultanément les compresseurs de climatisation et l'unité de chauffage électrique du véhicule 10.

Le circuit de refroidissement 64 est notamment adapté pour empêcher une surchauffe du chargeur 58 et/ou du convertisseur DC/DC 60.

De préférence, le support de fixation 66 fixe l'unité de recharge 30 à la face inférieure 38 du plancher 34.

Par exemple, le support de fixation 66 comprend au moins deux attaches 68.

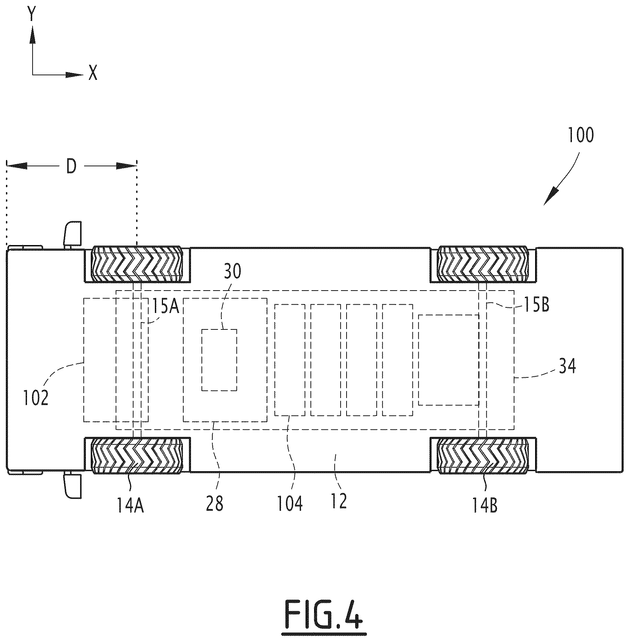

La Figure 4 montre le dessous d'un deuxième véhicule 100 selon l'invention, et en particulier un véhicule 100 selon un deuxième mode de réalisation de l'invention.

Ce deuxième véhicule 100 diffère du premier véhicule 10 décrit ci-dessus, uniquement en ce que ce deuxième véhicule 100 n'est pas un véhicule 4x4, mais un véhicule à hydrogène.

En particulier, le deuxième véhicule 100 ne comprend pas de deuxième moteur 22 agencé dans le compartiment moteur avant 16.

Le deuxième véhicule 10 comprend de préférence une pile à combustible 102, en particulier agencée dans le compartiment avant 16.

Le deuxième véhicule 100 comprend par exemple également des réservoirs 104 à hydrogène pour l'alimentation de la pile à combustible 102.

Ces réservoirs 104 sont par exemple arrangés en regard de la face inférieure 38 du plancher 34, et sont en particulier fixés au châssis 12.

Les réservoirs 104 sont par exemple des bouteilles contenant de l'hydrogène, notamment comprimé sous forme gazeuse, et destiné à alimenter la pile à combustible 102.

De tels véhicules 10, 100 sont particulièrement avantageux.

En particulier, un tel agencement de l'unité de recharge 30 permet d'éviter de placer celle-ci dans le compartiment moteur avant 16.

La taille du compartiment moteur avant 16 reste ainsi réduit, ce qui permet de garantir un porte-à faux réduit.

Par ailleurs, un tel agencement de l'unité de recharge 30 est adapté à différentes variantes de véhicule, notamment un véhicule 4x4 ou un véhicule à hydrogène.

En effet, l'architecture générale est conservée entre ces deux véhicules 10, 100, notamment grâce à l'agencement de l'unité de recharge 30 hors du compartiment avant 16, ce qui permet d'agencer des éléments spécifiques (deuxième moteur 22 ou pile à combustible 102) à ces variantes dans celui-ci.

## Revendications

1. Véhicule (10 ; 100) automobile, notamment électrique, comprenant :
- une caisse (24) délimitant un habitacle (32), la caisse comprenant un plancher (34) avec une face supérieure (36) orientée vers l'habitacle (32) et une face inférieure (38) opposée à la face supérieure (36) selon une direction verticale (Z), le plancher (34) comprenant un embossement (40),
- au moins un siège (26) agencé dans l'habitacle (32) et fixé sur la face supérieure (36) du plancher (34), l'embossement (40) s'étendant sous le siège (26),
- une batterie de traction (28), et
- une unité de recharge (30) agencée, selon la direction verticale (Z), entre la batterie de traction (28) et la face inférieure (38) de l'embossement (40) du plancher (34);
l'unité de recharge (30) comprenant un chargeur (58) et un convertisseur DC/DC (60).

2. Véhicule (10 ; 100) selon la revendication 1, dans lequel l'unité de recharge (30) comprend, en outre, des câblages haute-tension (62) reliant électriquement le chargeur (58) et la batterie de traction (28).

3. Véhicule (10 ; 100) selon la revendication 1 ou 2, dans lequel l'unité de recharge (30) comprend, en outre, un circuit de refroidissement (64).

4. Véhicule (10 ; 100) selon l'une quelconque des revendications 1 à 3, dans lequel l'unité de recharge (30) comprend un support de fixation (66) fixant l'unité de recharge (30) à la face inférieure (38) du plancher (34).

5. Véhicule (10 ; 100) selon l'une quelconque des revendications 1 à 4, dans lequel l'embossement (40) présente une section en forme de U inversé.

6. Véhicule (10 ; 100) selon l'une quelconque des revendications 1 à 5, comprenant, en outre, un compartiment moteur avant (16), un compartiment moteur arrière (18) et un moteur (20) agencé dans le compartiment moteur arrière (18).

7. Véhicule (10) selon la revendication 6, comprenant en outre un deuxième moteur (22) agencé dans le compartiment moteur avant (16).

8. Véhicule (100) selon la revendication 6, comprenant en outre une pile combustible (102) agencée dans le compartiment moteur avant (16).

9. Véhicule (100) selon la revendication 8, comprenant en outre des réservoirs (104) à hydrogène pour l'alimentation de la pile à combustible (102).

10. Véhicule (10 ; 100) selon l'une quelconque des revendications 1 à 9, dans lequel l'au moins un siège (26) est un siège avant du véhicule.
